# EUROPEAN PATENT APPLICATION

(11) **EP 3 398 911 A1**
(43) Date of publication of application: **07.11.2018**
(21) Application number: 17743235.8
(22) Date of filing: 06.06.2017
(51) Int. Cl.: C02F 9/02, C02F 1/00, C02F 9/00, B01D 61/02, B01D 61/04, B01D 61/08, B01D 61/12, C02F 1/44

(54) **WATER FILTRATION SYSTEM**

(30) Priority: 07.03.2017 CN 201710132251; 07.03.2017 CN 201720218895 U
(71) Applicant: Foshan Shunde Midea Water Dispenser MFG. Co., Ltd., Foshan, Guangdong 528311 (CN); Midea Group Co., Ltd., Foshan, Guangdong 528311 (CN)
(72) Inventor: YANG, Lyu, Guangdong 528311 (CN)
(74) Representative: Lam, Alvin
(86) International application number: PCT/CN2017/087305
(87) International publication number: WO 2018/161453

(57) **Abstract**

A water filtration system (100) is provided, including: a raw water inlet (100a); a pure water outlet (100b); a purified water outlet (100c); a waste water outlet (100d); an integrated filter cartridge (1) having first (10a) through sixth ports (10f), in which the third port (10c) is connected with a communication flow path (102), a free end of the communication flow path (102) is connected between the second port (10b) and the purified water outlet (100c), a water storage device (2) is disposed to at least one of a flow path connected to the pure water outlet (100b) and the sixth port (10f); and a return flow path (101) having a first end connected between the purified water outlet (100c) and the second port (10b) and a second end connected between the waste water outlet (100d) and the fifth port (10e).

## Description

### FIELD

The present disclosure relates to a technical field of water purification, and more particularly to a water filtration system.

### BACKGROUND

In the related art, in order to ensure a service life of a fine filter cartridge of a water filtration system of a water purifier, a recycling rate of the water filtration system (a ratio of pure water flow rate to raw water flow rate) is usually low, so that pure water flux of the water filtration system is small, which causes waste of water resources.

### SUMMARY

Embodiments of the present disclosure seek to solve at least one of the problems existing in the related art. Thus, the present disclosure is to propose a water filtration system, which improves a recycling rate of the water filtration system under the premise of ensuring a service life of a fine filter cartridge.

The water filtration system according to embodiments of the present disclosure, includes: a raw water inlet; a pure water outlet; a purified water outlet; a waste water outlet; an integrated filter cartridge including a pre-filter cartridge, a fine filter cartridge and a post-filter cartridge, and having a first port, a second port, a third port, a fourth port, a fifth port and a sixth port, in which the first port is connected to the raw water inlet, the second port is connected to the purified water outlet, a communication flow path is connected with the third port, a free end of the communication flow path is connected between the second port and the purified water outlet, the fourth port is connected to the pure water outlet, raw water entering through the raw water inlet is configured to flow out through the pure water outlet after filtered by the pre-filter cartridge, the fine filter cartridge and the post-filter cartridge successively, the raw water entering through the raw water inlet is configured to flow out through the purified water outlet after only filtered by the pre-filter cartridge, the fifth port is connected to the waste water outlet, and a water storage device is disposed to at least one of a flow path connected to the pure water outlet and the sixth port; and a return flow path having a first end connected between the purified water outlet and the second port and a second end connected between the waste water outlet and the fifth port.

In the water filtration system according to embodiments of the present disclosure, by providing the water filtration system with the return flow path, the recycling rate of the water filtration system is improved under the premise of ensuring the service life of the fine filter cartridge. Furthermore, by disposing the water storage device to at least one of the flow path connected to the pure water outlet and the fourth port of the water filtration system, a requirement of the user for a large amount of water can be satisfied. Meanwhile, the water filtration system can obtain water of two kinds of water quality, i.e. the pure water and the purified water, to improve a utilization rate of water resources and achieve water conservation

According to some embodiments of the present disclosure, the return flow path is provided with a throttle valve, so that a water inlet pressure in the integrated filter cartridge before the fine filter cartridge is maintained.

According to some embodiments of the present disclosure, the return flow path is provided with a flow control valve, so that a water saving effect is achieved while the service life of the fine filter cartridge is ensured.

According to some embodiments of the present disclosure, the return flow path is provided with a switch. Thus, waste water flux of the water filtration system is reduced, and pure water flux of the water filtration system is promoted.

According to some embodiments of the present disclosure, the pre-filter cartridge is disposed separately from the fine filter cartridge and the post-filter cartridge. Thus, a flow path inside the integrated filter cartridge is simplified.

According to some embodiments of the present disclosure, a flow path connected to the waste water outlet is provided with a waste water valve, which also maintains the water inlet pressure in the integrated filter cartridge before the fine filter cartridge.

According to some embodiments of the present disclosure, a water inlet valve and a booster pump are disposed between the second port and the purified water outlet, the water inlet valve is located between the purified water outlet and the booster pump, the free end of the communication flow path is located at a side of the water inlet valve adjacent to the purified water outlet, and the first end of the return flow path is located between the water inlet valve and the booster pump. Thus, the water filtration system can obtain water of two kinds of water quality, i.e. the pure water and the purified water, to improve the utilization rate of water resources, and normal operation of the water filtration system can be ensured by providing the return flow path.

According to some embodiments of the present disclosure, the water storage device is provided with a detection device, the detection device includes at least one of a pressure detection device and a liquid level detection device, and when the detection device detects that the water storage device is not full of liquid, a controller of the water filtration system controls the water inlet valve to open and controls the booster pump to operate. Thus, an automatic water storage function of the water filtration system is achieved.

According to some embodiments of the present disclosure, a pre-filtering mesh is disposed between the first port and the raw water inlet.

According to some embodiments of the present disclosure, a one-way valve and a high pressure switch are disposed between the fourth port and the pure water outlet, and the one-way valve and the high pressure switch are integrated into a whole. Thus, components of the water filtration system can be reduced and the water filtration system can be simplified.

According to some embodiments of the present disclosure, the water storage device is configured as a water storage bag, a pressure tank or a water box. Thus, the water storage device can be selectively provided according to practical situations to better satisfy the practical requirements.

According to some embodiments of the present disclosure, the fine filter cartridge is configured as a reverse osmosis filter cartridge or a nanofiltration membrane cartridge. Thus, the water quality of the pure water is ensured, and further health of the user is ensured.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present disclosure will become apparent and more readily appreciated from the following descriptions made with reference to the drawings, in which:

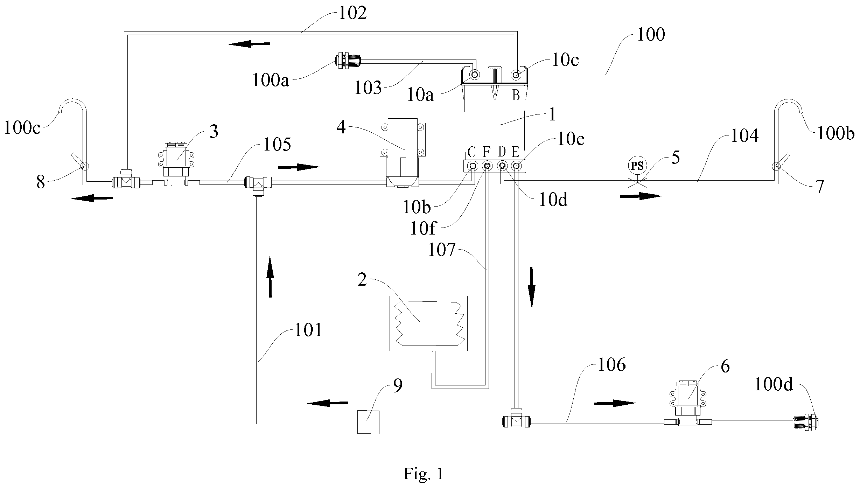

Fig. 1 illustrates a schematic view of a water filtration system according to an embodiment of the present disclosure.

Reference numerals:
100: water filtration system;
100a: raw water inlet; 100b: pure water outlet;
100c: purified water outlet; 100d: waste water outlet;
101: return flow path; 102: communication flow path; 103: raw water flow path;
104: pure water flow path; 105: purified water flow path; 106: waste water flow path; 107: water storage flow path;
1: integrated filter cartridge; 10a: first port; 10b: second port;
10c: third port; 10d: fourth port; 10e: fifth port; 10f: sixth port;
2: water storage device; 3: water inlet valve; 4: booster pump; 5: one-way valve and high pressure switch;
6: waste water solenoid valve; 7: pure water valve; 8: purified water valve; 9: throttle valve.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure.

Thus, features limited by "first" and "second" are intended to indicate or imply including one or more than one these features. In the description of the present disclosure, the term "a plurality of' means two or more than two, unless specified otherwise.

In the present disclosure, unless specified or limited otherwise, the terms "connected," "coupled" and the like are used broadly, and may be, for example, fixed connections, detachable connections, or integral connections; may also be mechanical or electrical connections; may also be direct connections or indirect connections via intervening structures; may also be inner communications of two elements. These having ordinary skills in the art should understand the specific meanings in the present disclosure according to specific situations.

A water filtration system 100 according to embodiments of the present disclosure will be described below with reference to Fig. 1.

As shown in Fig. 1, the water filtration system 100 according to embodiments of the present disclosure includes: a raw water inlet 100a, a pure water outlet 100b, a purified water outlet 100c, a waste water outlet 100d and an integrated filter cartridge 1.

The integrated filter cartridge 1 includes a pre-filter cartridge, a fine filter cartridge and a post-filter cartridge. The integrated filter cartridge 1 has a first port 10a, a second port 10b, a third port 10c, a fourth port 10d, a fifth port 10e and a sixth port 10f. The first port 10a is connected to the raw water inlet 100a. The second port 10b is connected to the purified water outlet 100c. The third port 10c is connected with a communication flow path 102, and a free end of the communication flow path 102 is connected between the second port 10b and the purified water outlet 100c. The fourth port 10d is connected to the pure water outlet 100b. After filtered by the pre-filter cartridge, the fine filter cartridge and the post-filter cartridge successively, raw water entering through the raw water inlet 100a is configured to flow out through the pure water outlet 100b; after only filtered by the pre filter cartridge, the raw water entering through the raw water inlet 100a is configured to flow out through the purified water outlet 100c. The fifth port 10e is connected to the waste water outlet 100d. At least one of a flow path connected to the pure water outlet 100b and the sixth port 10f is provided with a water storage device 2. A return flow path 101 has a first end connected between the purified water outlet 100c and the second port 10b and a second end connected between the waste water outlet 100d and the fifth port 10e.

It should be noted herein that the resulting water is "pure water" after the raw water is filtered by the pre-filter cartridge, the fine filter cartridge and the post-filter cartridge of the integrated filter cartridge 11, which can be drunk directly; the resulting water is "purified water" after the raw water is only filtered by the pre-filter cartridge of the integrated filter cartridge 11, which can serve as domestic water such as water for washing clothes, for flushing a toilet, etc.

For example, as shown in Fig. 1, the water filtration system 100 may further include a raw water flow path 103, a pure water flow path 104, a purified water flow path 105, a waste water flow path 106 and a water storage flow path 107. Specifically, the first port 10a of the integrated filter cartridge 1 is connected to the raw water inlet 100a through the raw water flow path 103; the second port 10b of the integrated filter cartridge 1 is connected to the purified water outlet 100c through the purified water flow path 105; the third port 10c of the integrated filter cartridge 1 is connected to the purified water outlet 100c through the communication flow path 102, and the third port 10c of the integrated filter cartridge 1 is connected to the second port 10b of the integrated filter cartridge 1 through the communication flow path 102 and the purified water flow path 105; the fourth port 10d of the integrated filter cartridge 1 is connected to the pure water outlet 100b through the pure water flow path 104; the fifth port 10e of the integrated filter cartridge 1 is connected to the waste water outlet 100d through the waste water flow path 106; the water storage device 2 is disposed to the water storage flow path 107, and the water storage device 2 is connected to the sixth port 10f of the integrated filter cartridge 1 through the water storage flow path 107. Further, a pure water valve 7 may be disposed at the pure water outlet 100b to achieve opening and closing of the pure water outlet 100b. Also, a purified water valve 8 may be disposed at the purified water outlet 100c to achieve opening and closing of the purified water outlet 100c. The first end of the return flow path 101 may be connected to the purified water flow path 105, and the second end of the return flow path 101 may be connected to the waste water flow path 106.

When the pure water is needed, the pure water valve 7 can be opened, and the purified water valve 8 remains in a closed state. The raw water flows from the raw water inlet 100a into the integrated filter cartridge 1 successively through the raw water flow path 103 and the first port 10a. The raw water becomes the purified water after filtered by the pre-filter cartridge. The purified water flows out of the integrated filter cartridge 1 through the third port 10c, and flows into the integrated filter cartridge 1 again successively through the communication flow path 102, the purified water flow path 105 and the second port 10b. The purified water becomes the pure water after filtered by the fine filter cartridge and the post-filter cartridge successively. The pure water flows out of the integrated filter cartridge 1 through the fourth port 10d, and flows out successively through the pure water flow path 104 and the pure water outlet 100b for use by a user. The pure water can directly serve as drinking water. In this process, the waste water produced flows out of the integrated filter cartridge 1 through the fifth port 10e, a part thereof flows through the waste water flow path 106 and flows out from the waste water outlet 100d, and the other part thereof returns to the purified water flow path 105 through the return flow path 101 and flows through the second port 10b into the integrated filter cartridge 1 for filtration together with the purified water. By partially recycling the waste water of the water filtration system 100 to converge with the purified water, this part of the waste water can be filtered once again by the integrated filter cartridge 1, which can ensure the service life of the fine filter cartridge without increasing a filtration burden on the fine filter cartridge, improve a recycling rate of the water filtration system 100, promote pure water flux of the water filtration system 100, and achieve a water saving effect. The raw water entering through the first port 10a can be preliminarily filtered by the pre-filter cartridge, and for example, the pre-filter cartridge can effectively remove rust, sediment and colloid in the water, and absorb residual chlorine, part of organic matter and the like in the water. The water preliminarily filtered by the pre filter cartridge can be finely filtered by the fine filter cartridge, and for example, the fine filter cartridge can effectively remove bacteria, viruses, heavy metal ions and the like in the water. The water finely filtered by the fine filter cartridge can be further filtered by the post-filter cartridge, and for example, the post filter cartridge can effectively remove residual chlorine and organic matter to improve the taste of water.

When the purified water is needed, the purified water valve 8 can be opened, and the pure water valve 7 remains in a closed state. The raw water flows from the raw water inlet 100a into the integrated filter cartridge 1 successively through the raw water flow path 103 and the first port 10a. The raw water becomes the purified water after filtered by the pre-filter cartridge. The purified water flows out of the integrated filter cartridge 1 through the third port 10c, and flows out successively through the communication flow path 102 and the purified water outlet 100c. The purified water can serve as daily domestic water of the user, such as the water for washing clothes. In this process, a small amount of waste water or basically no waste water is produced.

As can be seen from the above, the water filtration system 100 can obtain water of two different kinds of water quality, i.e. the pure water and the purified water used for different purposes, which thus can fully utilize water resources, improve a utilization rate of the water resources, and achieve water conservation.

When a large amount of water is needed, a certain amount of water can be stored in the water storage device 2 in advance. Specially, the pure water valve 7 can be closed, and meanwhile the purified water valve 8 can be closed. The raw water flows from the raw water inlet 100a into the integrated filter cartridge 1 successively through the raw water flow path 103 and the first port 10a, and flows out of the integrated filter cartridge 1 through the third port 10c after filtered by the pre-filter cartridge. The water flows into the integrated filter cartridge 1 again successively through the communication flow path 102, the purified water flow path 105 and the second port 10b, and then flows out of the integrated filter cartridge 1 through the sixth port 10f after filtered by the fine filter cartridge. Finally, the water flows into the water storage device 2 through the water storage flow path 107 for storage until the water storage device 2 is full of water. In this process, the waste water produced can also flow out of the integrated filter cartridge 1 through the fifth port 10e, a part thereof flows out successively through the waste water flow path 106 and the waste water outlet 100d, and the other part thereof returns to the purified water flow path 105 through the return flow path 101 and flows through the second port 10b into the integrated filter cartridge 1 for filtration together with the purified water. By providing the water storage device 2, when the pure water valve 7 is opened and the purified water valve 8 remains in the closed state, the water storage device 2 can feed the water in the water storage device 2 into the integrated filter cartridge 1 again successively through the water storage flow path 107 and the sixth port 10f by means of pressure (for example, the pressure is applied to the water in the water storage device 2 by the user or other devices) or other powers. The water becomes the pure water after filtered by the post-filter cartridge, and flows out from the pure water outlet 100b passing through the pure water flow path 104, which thus satisfies the requirement of the user for a large amount of water.

Certainly, the present disclosure is not limited to this. The water storage flow path 107 at the sixth port 10f and the pure water flow path 104 can be provided with the water storage device 2 separately (not illustrated), so as to further satisfy the requirement of the user for a large amount of water. Alternatively, the water filtration system 100 may also not include the water storage flow path 107, in which case the water storage device 2 can be disposed to the pure water flow path 104 (not illustrated). In this case, the requirement of the user for a large amount of water can also be well satisfied and the water filtration system 100 has relatively few components, which reduces an occupied space of the whole water filtration system 100 and saves the costs.

It should be understood that, the purified water outlet 100c and the pure water outlet 100b may share a water outlet valve. The water outlet valve has three states. That is, when the water outlet valve is in a first state, the purified water outlet 100c is opened and the pure water outlet 100b is closed; when the water outlet valve is in a second state, the purified water outlet 100c is closed and the pure water outlet 100b is closed; when the water outlet valve is in a third state, the purified water outlet 100c is closed, and the pure water outlet 100b is opened. Thus, the components of the water filtration system 100 can be further reduced. The above water outlet valve may be configured as a three-way valve, but it is not limited to this.

In the water filtration system 100 according to embodiments of the present disclosure, the water filtration system 100 is provided with the return flow path 101, and the return flow path 101 has the first end connected between the purified water outlet 100c and the second port 10b and the second end connected between the waste water outlet 100d and the fifth port 10e, so that part of the waste water of the water filtration system 100 can be recycled so as to flow into the integrated filter cartridge 1 again for filtration. Thus, under the premise of ensuring the service life of the fine filter cartridge, the recycling rate of the water filtration system 100 is improved, and the water saving effect is achieved. Furthermore, by disposing the water storage device 2 to at least one of the flow path connected to the pure water outlet 100b and the sixth port 10f of the water filtration system 100, the requirement of the user for a large amount of water can be satisfied. Meanwhile, the integrated filter cartridge 1 is provided with the first port 10a, the second port 10b, the third port 10c, the fourth port 10d and the fifth port 10e. The first port 10 is connected to the raw water inlet 100a of the water filtration system 100; the second port 10b is connected to the purified water outlet 100c; the free end of the communication flow path 102 at the third port 10c is connected between the second port 10b and the purified water outlet 100c; the fourth port 10d is connected to the pure water outlet 100b; the fifth port 10e is connected to the waste water outlet 100d. Thus, the water filtration system 100 can obtain water of two kinds of water quality, i.e. the pure water and the purified water used for different purposes, and the water resources can be fully utilized, which improves the utilization rate of the water resources and achieves the water conservation. In addition, by employing the integrated filter cartridge 1 composited of the pre-filter cartridge, the fine filter cartridge and the post-filter cartridge, the integrated filter cartridge 1 is configured as an integrated structure, which facilitates replacement of the integrated filter cartridge 1, reduces a volume of the integrated filter cartridge 1, and meanwhile simplifies the connection between flow paths of the water filtration system 100 to improve the applicability of the water filtration system 100.

In some embodiments of the present disclosure, as shown in Fig. 1, the return flow path 101 is provided with a throttle valve 9. The throttle valve 9 is used to throttle the waste water in the return flow path 101, so that a water inlet pressure in the integrated filter cartridge 1 before the fine filter cartridge can be maintained.

Further, a flow path connected to the waste water outlet 100d is provided with a waste water valve, and the waste water valve is configured to achieve opening and closing of the waste water outlet 100d. Optionally, the waste water valve may be a waste water solenoid valve 6, and the waste water solenoid valve 6 is in a deenergized state normally, in which case a small hole is defined in the waste water solenoid valve 6 to ensure communication of the waste water flow path 106, and to maintain the water inlet pressure in the integrated filter cartridge 1 before the fine filter cartridge. It should be understood that, the specific structure and working principle of the waste water solenoid valve 6 is well known to those skilled in the art, which will not be described herein. Certainly, the waste water valve may also be a waste water manual valve, but it is not limited to this.

For example, in an example shown in Fig. 1, the return flow path 101 is provided with the throttle valve 9, and the flow path connected to the waste water outlet 100d is provided with the waste water solenoid valve 6. The throttle valve 9 can throttle the waste water in the return flow path 101, and the waste water solenoid valve 6 can throttle the waste water in the waste water flow path 106, so that the water inlet pressure in the integrated filter cartridge 1 before the fine filter cartridge can be maintained. Furthermore, the return flow path 101 can enable part of the waste water to flow back to the purified water flow path 105, and flow into the integrated filter cartridge 1 for filtration, so that the recycling rate of the water filtration system 100 is improved, and the pure water flux of the water filtration system 100 is promoted.

Optionally, the return flow path 101 is provided with a switch (not illustrated), and the switch can achieve communication and blockage of the return flow path 101. When the water quality of the raw water is good without increasing the filtration burden on the fine filter cartridge or when water consumption of the user is too large, the switch in the return flow path 101 can be closed, to disconnect the first end of the return flow path 101 from the second end of the return flow path 101. In this case, the waste water produced by the water filtration system 100 can only be discharged via the waste water outlet 100d through the waste water flow path 106. Since the waste water of the water filtration system 100 is throttled only in the waste water flow path 106, waste water flux of the water filtration system 100 is reduced, and the pure water flux of the water filtration system 100 is promoted. When the water quality of the raw water is poor, the switch in the return flow path 101 requires to be opened, to communicate the first end of the return flow path 101 with the second end of the return flow path 101. In this case, part of the waste water produced by the water filtration system 100 flows out successively through the waste water flow path 106 and the waste water outlet 100d, and the other part of the waste water flows back to the purified water flow path 105 through the return flow path 101 and flows through the second port 10b into the integrated filter cartridge 1 for filtration together with the purified water, so that the recycling rate of the water filtration system 100 is improved, and the pure water flux of the water filtration system 100 is promoted. It should be understood that, when the above switch is disposed to the return flow path 101, the throttle valve 9 can be disposed to the return flow path 101 at the same time, or no throttle valve 9 is disposed to the return flow path 101, both of which will promote the pure water flux of the water filtration system 100.

It should be understood that, the return flow path 101 may be provided with a flow control valve (not illustrated), such as a flow control solenoid valve. The flow control valve can be adjusted based on parameters, such as the water quality of the raw water, to adjust the waste water flux in the return flow path 101, so that under the premise of ensuring the service life of the fine filter cartridge, the purpose of promoting the pure water flux of the water filtration system 100 is achieved, and the water saving effect is achieved. For example, when the water quality of the raw water is good, the waste water flux in the return flow path 101 can be reduced by adjusting the flow control valve; when the water quality of the raw water is poor, the waste water flux in the return flow path 101 can be increased by adjusting the flow control valve, both of which can improve the recycling rate of the water filtration system 100.

In some optional embodiments of the present disclosure, the pre-filter cartridge is disposed separately from the fine filter cartridge and the post-filter cartridge. That is, in the integrated filter cartridge 1, the pre-filter cartridge is disposed individually and separated from the fine filter cartridge and the post-filter cartridge, as long as the pre-filter cartridge is located upstream of the fine filter cartridge and the post-filter cartridge, so that the flow path inside the integrated filter cartridge 1 can be simplified. It should be understood that, the pre-filter cartridge may also be disposed without being separated from the fine filter cartridge and the post filter cartridge. For example, the pre-filter cartridge can be fitted over exteriors of the fine filter cartridge and the post filter cartridge.

Optionally, the pre-filter cartridge is located at the top of the fine filter cartridge and the post-filter cartridge. For example, in an example shown in Fig. 1, the raw water flows from the raw water inlet 100a into the integrated filter cartridge 1 successively through the raw water flow path 103 and the first port 10a. The purified water obtained after filtered by the pre-filter cartridge flows out through third port 10c. Since the pre-filter cartridge is disposed at the top of the fine filter cartridge and the post-filter cartridge, the first port 10a and the third port 10c both can be disposed in an upper portion of the integrated filter cartridge 1, while the second port 10b, the fourth port 10d, the fifth port 10e and the sixth port 10f can be all disposed in a lower portion of the integrated filter cartridge 1, so that the ports of the integrated filter cartridge 1 are arranged in a dispersed manner, thereby facilitating connections between ports of the integrated filter cartridge 1 and flow paths of the water filtration system 100.

In some embodiments of the present disclosure, a water inlet valve 3 and a booster pump 4 are disposed between the second port 10b and the purified water outlet 100c. The water inlet valve 3 is located between the purified water outlet 100c and the booster pump 4, in which the free end of the communication flow path 102 is located at a side of the water inlet valve 3 adjacent to the purified water outlet 100c, and the first end of the return flow path 101 is located between the water inlet valve 3 and the booster pump 4. For example, as shown in Fig. 1, the water inlet valve 3 and the booster pump 4 may be disposed along the purified water flow path 105 and spaced apart from each other. The water inlet valve 3 is configured to control the communication and blockage of the purified water flow path 105. When the water inlet valve 3 is opened, and the purified water valve 8 remains in the closed state, the purified water filtered by the pre-filter cartridge can flow through the purified water flow path 105 into the integrated filter cartridge 1 for filtration; when the water inlet valve 3 is closed, the purified water filtered by the pre-filter cartridge cannot flow into the integrated filter cartridge 1 through the purified water. The booster pump 4 is configured to improve a pressure of the purified water to ensuring that the purified water can permeate into the fine filter cartridge for filtration. Specifically, when the water inlet valve 3 is opened, and the booster pump 4 operates and the purified water valve 8 remains in the closed state, the purified water flowing to the integrated filter cartridge 1 has a larger pressure, so that the purified water can smoothly permeate into the fine filter cartridge for filtration. In this case, the pure water obtained can flow out successively through the fourth port 10d, the pure water flow path 104 and the pure water outlet 100b. Part of the waste water can flow back to the purified water flow path 105 between the water inlet valve 3 and the booster pump 4 through the return flow path 101, and can flow into the integrated filter cartridge 1 for filtration together with the purified water. When the water inlet valve 3 is closed, only the purified water can be obtained. In this case, the purified water valve 8 can be opened, and the purified water flows out successively through the third port 10c, the communication flow path 102 and the purified water outlet 100c.

The free end of the communication flow path 102 is located at the side of the water inlet valve 3 adjacent to the purified water outlet 100c, so that the raw water becomes the purified water after filtered by the pre-filter cartridge of the integrated filter cartridge 1, and the purified water flows to the water inlet valve 3 and the booster pump 4. The pre-filter cartridge removes impurities in the raw water to prevent the water inlet valve 3 and the booster pump 4 from being clogged by those impurities, thereby ensuring normal operation of the water filtration system 100. Furthermore, it is unnecessary to provided components, such as a pre-filtering mesh, upstream of the water inlet valve 3, which reduces components of the water filtration system 100, and simplifies the water filtration system 100. Moreover, since the first end of the return flow path 101 is located between the water inlet valve 3 and the booster pump 4, it is possible to prevent the purified water from flowing into the return flow path 101 when the first end of the return flow path 101 is located upstream of the water inlet valve 3; and it is also possible to prevent part of the waste water in the return flow path 101 from failing to flow into the integrated filter cartridge 1 due to the pressurization of the booster pump 4 when the first end of the return flow path 101 is located downstream of the booster pump 4. From the above mentioned, the water filtration system 100 can obtain water of two kinds of water quality, i.e. the pure water and the purified water, to improve the utilization rate of the water resources. The water inlet valve 3 may be configured as a solenoid valve, but it is not limited to this.

It should be understood that, the water inlet valve 3 and the booster pump 4 may not be disposed between the second port 10b and the purified water outlet 100c. In this case, the waste water valve requires to be disposed to the waste water flow path 105. The waste water valve can be configured as a waste water manual valve, the purified water valve 8 can be configured as a purified water manual valve, and the pure water valve 7 can be configured as a pure water manual valve, so that it is only necessary to adjust opening and closing of the purified water manual valve, the pure water manual valve and the waste water manual valve without need for any electric equipment such as the booster pump 4 during the use of the water filtration system 100, which simplifies the water filtration system 100, and achieves the purpose of saving electricity and costs. Specifically, when the purified water is needed, the purified water manual valve can be opened, and the pure water manual valve remains in the closed state, such that the raw water flows out through the third port 10c after filtered by the integrated filter cartridge 1, and flows out successively through the communication flow path 101 and the purified water outlet 100c for use by the user, in which case basically no waste water is produced, and the waste water manual valve can remain in the closed state; when the pure water is needed, the pure water manual valve and the waste water manual valve can be opened, while the purified water manual valve remains in the closed state, such that the raw water can permeate into the fine filter cartridge for filtration, flow out of the integrated filter cartridge 1 through the fourth port 10d, and finally flow out successively through the pure water flow path 104 and the pure water outlet 100b for use by the user, and at the same time part of the waste water produced flows out successively through the waste water flow path 106 and the waste water outlet 100d, and the other part of the waste water flows back to the purified water flow path 105 through the return flow path 101 and flows into the integrated filter cartridge 1 for filtration together with the purified water.

Similarly, it is possible that only the water inlet valve 3 is disposed between the second port 10b and the purified water outlet 100c and the booster pump 4 is not disposed between the second port 10b and the purified water outlet 100c. The water inlet valve 3 can be configured as a water inlet manual valve, the purified water valve 8 can be configured as the purified water manual valve, and the pure water valve 7 can be configured as the pure water manual valve, so that it is only necessary to adjust opening and closing of the purified water manual valve, the pure water manual valve and the waste water manual valve without need for any electric equipment such as the booster pump 4 during the use of the water filtration system 100, which simplifies the water filtration system 100. Specifically, when the purified water is needed, the water inlet manual valve and the purified water manual valve can be opened, and the pure water manual valve remains in the closed state, such that the raw water flows out through the third port 10c after filtered by the integrated filter cartridge 1, and flows out successively through the communication flow path 101 and the purified water outlet 100c for use by the user, in which case basically no waste water is produced; when the pure water is needed, the water inlet manual valve and the pure water manual valve can be opened, and the purified water manual valve remains in the closed state, such that the raw water can permeate into the fine filter cartridge for filtration, flow out of the integrated filter cartridge 1 through the fourth port 10d, and finally flow out successively through the pure water flow path 104 and the pure water outlet 100b for use by the user, and at the same time part of the waste water produced flows out successively through the waste water flow path 106 and the waste water outlet 100d, and the other part of the waste water flows back to the purified water flow path 105 through the return flow path 101 and flows into the integrated filter cartridge 1 for filtration together with the purified water. However, the present disclosure is not limited to this.

Further, the water storage device 2 is provided with a detection device (not illustrated). The detection device includes at least one of a pressure detection device and a liquid level detection device. When the detection device detects that the water storage device 2 is not full of the liquid, a controller (not illustrated) of the water filtration system 100 will control the water inlet valve 3 to open and control the booster pump 4 to operate. Thus, by providing the water storage device 2 with the detection device that can detect whether the water storage device 2 is full of the liquid, an automatic water storage function of the water filtration system 100 can be achieved so as to satisfy a requirement of water supply.

For example, as shown in Fig. 1, the pure water valve 7 is closed, the purified water valve 8 is closed, and the detection device can detect in real time whether the water stored in the water storage device 2 has filled up the water storage device 2. When the detection device detects that the water storage device 2 is not full of the water, a signal will be transmitted to the controller by the detection device, and the controller controls the water inlet valve 3 to open and controls the booster pump 4 to operate, such that the purified water obtained after the raw water is filtered by the pre filter cartridge flows into the integrated filter cartridge 1 successively through the communication flow path 102 and the purified water flow path 105, flows out of the integrated filter cartridge 1 through the sixth port 10f after filtered by the fine filter cartridge, and finally flows into the water storage device 2 for storage through the water storage flow path 107 until the water storage device 2 is full. When the detection device detects that the water storage device 2 is full of the water, a signal will be transmitted to the controller, and the controller will control the water inlet valve 3 to close and control the booster pump 4 to stop operating.

Optionally, the pressure detection device is configured as a pressure sensor, and the liquid level detection device is configured as a liquid level sensor. The pressure sensor can be configured to detect the pressure of the liquid in the water storage device 2, and the liquid level sensor can be configured to detect a liquid level of the liquid in the water storage device 2, so that the water filtration system 100 is more intelligentialized, which greatly facilitates the user.

When the pressure detection device is configured as the pressure sensor, and the pressure detected by the pressure sensor is smaller than a set value thereof (for example, the pressure of the liquid when the water storage device 2 is full of the liquid is configured as the set value), the controller controls the water inlet valve 3 to open and controls the booster pump 4 to start, such that the raw water flows into the water storage device 2 after filtered by the pre-filter cartridge and the fine filter cartridge successively, until the water storage device 2 is full of the water; when the pressure detected by the pressure sensor reaches the set value thereof, and the controller controls the water inlet valve 3 to close and controls the booster pump 4 to stop operating.

When the liquid level detection device is configured as the liquid level sensor, and the liquid level detected by the liquid level sensor is lower than a preset value thereof (for example, the liquid level of the liquid when the water storage device 2 is full of the liquid is configured as the preset value), the controller controls the water inlet valve 3 to open and controls the booster pump 4 to start, such that the raw water flows into the water storage device 2 after filtered by the pre-filter cartridge and the fine filter cartridge successively, and the amount of the water in the water storage device 2 increases gradually until the water storage device 2 is full of the water; when the liquid level detected by the liquid level sensor reaches the preset value, the controller controls the water inlet valve 3 to close and controls the booster pump 4 to stop operating.

It should be understood that, the water storage device 2 may not be provided with any detection device. For example, the water storage device 2 may be transparent, so that the user can observe the water level in the water storage device 2 directly. When the user observes that the water storage device 2 is not full of the liquid, i.e. the water level is low, the water inlet manual valve can be opened, and the pure water manual valve and the purified water manual valve both remain in the closed state, so as to achieve the water storage function of the water storage device 2. However, the present disclosure is not limited to this. Thus, the detection of the water storage of the water storage device 2 may not need any electric detection devices, such as the pressure sensor or the liquid level sensor, during the use of the water filtration system 100, thereby achieving the purpose of saving electricity and costs.

Further, the pre-filtering mesh (not illustrated) is disposed between the first port 10a and the raw water inlet 100a, that is, the pre-filtering mesh is disposed to the raw water flow path 103 to filter macroscopic objects in the raw water, for example, large particle impurities such as rust, so that the raw water flow path 103 can be prevented from being clogged, and the pre-filter cartridge can be protected so as to extend the service life of the pre-filter cartridge.

In some embodiments of the present disclosure, a one-way valve and a high pressure switch are disposed between the fourth port 10d and the pure water outlet 100b, and the one-way valve and the high pressure switch are integrated into a whole. The one-way valve can prevent the pure water in the pure water flow path 104 from flowing back into the integrated filter cartridge 1; the high pressure switch can detect the pressure at its location, and transmit a detection signal to the controller; the controller controls operations of the water inlet valve 3 and the booster pump 4 to achieve feedback controls of the water inlet valve 3 and the booster pump 4.

For example, in an example shown in Fig. 1, the one-way valve and the high pressure switch between the fourth port 10d and the pure water outlet 100b are integrated into a one-way valve and high pressure switch 5. Thus, by integrating the one-way valve and the high pressure switch into a whole, the number of components of the water filtration system 100 is reduced, which simplifies the water filtration system 100.

When the pure water is needed, the pure water valve 7 can be opened, and the purified water valve 8 remains in the closed state, the high pressure switch can detect that the pressure at its location is smaller than a set pressure p₁, in which the set pressure p₁ can satisfy: 0.2MPa≤p₁≤ 0.25MPa, and transmit a signal to the controller, and the controller controls the water inlet valve 3 to open and controls the booster pump 4 to operate, such that the raw water flows from the raw water inlet 100a into the integrated filter cartridge 1 successively through the raw water flow path 103 and the first port 10a, and becomes the pure water after filtered by the integrated filter cartridge 1, and the pure water finally flows out through the pure water outlet 100b for direct drinking by the user. Then, the pure water valve 7 can be closed; since the one-way valve limits backflow of the water, the pressure at the location of the high pressure switch increases gradually; when the foregoing pressure reaches the set pressure p₁, the high pressure switch transmit a signal to the controller, and the controller controls the water inlet valve 3 to close and controls the booster pump 4 to stop operating. It should be understood that, the set pressure p₁ of the high pressure switch may be set according to practical situations to better satisfy the requirement of the user.

When the purified water is needed, the purified water valve 8 can be opened, and the pure water valve 7 remains in the closed state, such that the raw water flows from the raw water inlet 100a into the integrated filter cartridge 1 successively through the raw water flow path 103 and the first port 10a, and becomes purified water after filtered by the pre-filter cartridge; the purified water flows out of the integrated filter cartridge 1 through the third port 10c, and flows out successively through the communication flow path 102 and the purified water outlet 100c for use by the user. In this case, even if the pure water valve 7 is opened, no pure water will flow out through the pure water outlet 100b. Then, the purified water valve 8 can be closed, and the purified water cannot flow out through the purified water outlet 100c.

Certainly, in other embodiments of the present disclosure, the one-way valve and the high pressure switch can also be disposed separately from each other (not illustrated). It should be understood that, only the one-way valve may be disposed between the fourth port 10d and the pure water outlet 100b and no high pressure switch is disposed between the fourth port 10d and the pure water outlet 100b, so as to further simplify a structure of the water filtration system 100 and reduce costs.

Optionally, the water storage device 2 is configured as a water storage bag, a pressure tank or a water box, and so on. The water storage bag or the pressure tank may be connected to the sixth port 10f, and the water box may be disposed to the pure water flow path 104, so that the requirement of the user for a large amount of water can be satisfied. The water storage bag is foldable and easy to store, and has a small volume, and water storage bags of various specifications can be customized according to the requirement of the user to better satisfy the requirement of the user. The pressure tank is safe, reliable and economical, and furthermore, the pressure tank can utilize compressibility of air in the tank to adjust the amount of the water to be stored. The water box will not pollute the water, thereby ensuring cleaness and hygiene of the water, and furthermore, the water box has high strength and light weight, and a neat and artistic appearance, and is easy to clean.

Optionally, the fine filter cartridge is configured as a reverse osmosis filter cartridge or a nanofiltration membrane cartridge and the like. Since the reverse osmosis membrane can filter the bacteria, viruses, heavy metal ions and the like in the water, the reverse osmosis filter cartridge can strictly separate the water which can permeate the reverse osmosis membrane from concentrated water which cannot permeate the reverse osmosis membrane. The nanofiltration membrane can remove organic matter and chroma in the water, partially remove dissolved salts, and remove hardness of the water. Furthermore, the nanofiltration membrane filter cartridge can also strictly separate the water which can permeate the nanofiltration membrane from the concentrated water which cannot permeate the nanofiltration membrane. Thus, regardless of employing the reverse osmosis filter cartridge or the nanofiltration membrane filter cartridge, the fine filter cartridge can obtain high filtration accuracy, and the water passing through the fine filter cartridge has better water quality, thereby ensuring the water quality of the pure water and ensuring the health of the user.

After the water filtration system 100 is used for a period of time, the integrated filter cartridge 1 needs to be cleaned, in which case the pure water valve 7 and the purified water valve 8 can be closed, and the controller controls the water inlet valve 3 to open, the booster pump 4 to operate, and the waste water solenoid valve 6 to be energized (in which case the waste water solenoid valve 6 is fully opened), such that the raw water flows from the first port 10a into the integrated filter cartridge 1, flows out through the third port 10c after flushing the pre-filter cartridge, and flows into the integrated filter cartridge 1 again successively through the communication flow path 102, the purified water flow path 105 and the second port 10b to flush the fine filter cartridge, so that the impurities attached to the pre-filter cartridge and the fine filter cartridge of the integrated filter cartridge 1 can be removed to allow the integrated filter cartridge 1 to continue to be used, thereby extending the service life of the integrated filter cartridge 1.

Certainly, when the water filtration system 100 is not provided with any electric equipment such as the booster pump 4, the detection device, or the high pressure switch, that is, there is no need to provide electrical energy for the water filtration system 100, the water filtration system 100 can also operate normally. For example, the water inlet valve 3 is configured as the water inlet manual valve, the pure water valve 3 is configured as the pure water manual valve, the purified water valve 8 is configured as the purified water manual valve, and the waste water valve is configured as the waste water manual valve. In this case, when the integrated filter cartridge 1 is to be cleaned, the pure water manual valve and the purified water manual valve can be closed, and the water inlet manual valve and the waste water manual valve can be opened (in which case the waste water manual valve is fully opened), such that the raw water flows from the first port 10a into the integrated filter cartridge 1 to flush the pre filter cartridge and the fine filter cartridge successively, which can also extend the service life of the integrated filter cartridge 1.

Other constitutions and operations of the water filtration system 100 according to embodiments of the present disclosure are well known by those skilled in the art, which will not be described in detail herein.

Reference throughout this specification to "an embodiment," "some embodiments," "an illustrative embodiment,t" "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of the present disclosure have been shown and illustrated, it shall be understood by those skilled in the art that various changes, modifications, alternatives and variants without departing from the principle of the present disclosure are acceptable. The scope of the present disclosure is defined by the claims or the like.

## Claims

1. A water filtration system, comprising:
a raw water inlet;
a pure water outlet;
a purified water outlet;
a waste water outlet;
an integrated filter cartridge comprising a pre-filter cartridge, a fine filter cartridge and a post-filter cartridge, and having a first port, a second port, a third port, a fourth port, a fifth port and a sixth port, wherein the first port is connected to the raw water inlet, the second port is connected to the purified water outlet, a communication flow path is connected with the third port, a free end of the communication flow path is connected between the second port and the purified water outlet, the fourth port is connected to the pure water outlet, raw water entering through the raw water inlet is configured to flow out through the pure water outlet after filtered by the pre-filter cartridge, the fine filter cartridge and the post-filter cartridge successively, the raw water entering through the raw water inlet is configured to flow out through the purified water outlet after only filtered by the pre-filter cartridge, the fifth port is connected to the waste water outlet, and a water storage device is disposed to at least one of a flow path connected to the pure water outlet and the sixth port; and
a return flow path having a first end connected between the purified water outlet and the second port and a second end connected between the waste water outlet and the fifth port.

2. The water filtration system according to claim 1, wherein the return flow path is provided with a throttle valve.

3. The water filtration system according to claim 1, wherein the return flow path is provided with a flow control valve.

4. The water filtration system according to any one of claims 1 to 3, wherein the return flow path is provided with a switch.

5. The water filtration system according to any one of claims 1 to 4, wherein the pre-filter cartridge is disposed separately from the fine filter cartridge and the post-filter cartridge.

6. The water filtration system according to any one of claims 1 to 5, wherein a flow path connected to the waste water outlet is provided with a waste water valve.

7. The water filtration system according to any one of claims 1 to 6, wherein a water inlet valve and a booster pump are disposed between the second port and the purified water outlet, the water inlet valve is located between the purified water outlet and the booster pump, the free end of the communication flow path is located at a side of the water inlet valve adjacent to the purified water outlet, and the first end of the return flow path is located between the water inlet valve and the booster pump.

8. The water filtration system according to claim 7, wherein the water storage device is provided with a detection device, the detection device comprises at least one of a pressure detection device and a liquid level detection device, and when the detection device detects that the water storage device is not full of liquid, a controller of the water filtration system controls the water inlet valve to open and controls the booster pump to operate.

9. The water filtration system according to any one of claims 1 to 8, wherein a pre-filtering mesh is disposed between the first port and the raw water inlet.

10. The water filtration system according to any one of claims 1 to 9, wherein a one-way valve and a high pressure switch are disposed between the fourth port and the pure water outlet, and the one-way valve and the high pressure switch are integrated into a whole.

11. The water filtration system according to any one of claims 1 to 10, wherein the water storage device is configured as a water storage bag, a pressure tank, or a water box.

12. The water filtration system according to any one of claims 1 to 11, wherein the fine filter cartridge is configured as a reverse osmosis filter cartridge or a nanofiltration membrane filter cartridge.
